(19) **Europäisches Patentamt**

**European Patent Office**

**Office européen des brevets**

(11) **EP 1 121 579 B1**

(12) **EUROPÄISCHE PATENTSCHRIFT**

(45) Veröffentlichungstag und Bekanntmachung des Hinweises auf die Patenterteilung:
**11.09.2002 Patentblatt 2002/37**

(21) Anmeldenummer: **99970732.6**

(22) Anmeldetag: **04.10.1999**

(51) Int Cl.$^7$: **G01N 21/15**, F23N 5/08

(86) Internationale Anmeldenummer:
**PCT/DE99/03190**

(87) Internationale Veröffentlichungsnummer:
**WO 00/023788 (27.04.2000 Gazette 2000/17)**

(54) **VERFAHREN ZUM ÜBERWACHEN EINES OPTISCHEN SYSTEMS MIT EINER UNMITTELBAR AN EINEM VERBRENNUNGSRAUM ANGEORDNETEN FRONTLINSE UND VORRICHTUNG ZUR DURCHFÜHRUNG DES VERFAHRENS**

METHOD FOR MONITORING AN OPTICAL SYSTEM WITH A FRONT LENS DIRECTLY MOUNTED IN A COMBUSTION CHAMBER AND DEVICE FOR IMPLEMENTING SAID METHOD

PROCEDE ET DISPOSITIF POUR LA SURVEILLANCE D'UN SYSTEME OPTIQUE A LENTILLE FRONTALE DISPOSEE A PROXIMITE IMMEDIATE D'UNE CHAMBRE DE COMBUSTION

(84) Benannte Vertragsstaaten:
**AT BE CH CY DE DK ES FI FR GB GR IE IT LI LU MC NL PT SE**

(30) Priorität: **16.10.1998 DE 19847832**

(43) Veröffentlichungstag der Anmeldung:
**08.08.2001 Patentblatt 2001/32**

(73) Patentinhaber: **SIEMENS AKTIENGESELLSCHAFT**
**80333 München (DE)**

(72) Erfinder: **MERKLEIN, Thomas**
**D-91056 Erlangen (DE)**

(56) Entgegenhaltungen:
**EP-A- 0 616 200          DE-A- 1 909 029**
**DE-A- 19 710 206**

EP 1 121 579 B1

**Beschreibung**

Die Erfindung bezieht sich auf ein Verfahren zum Überwachen eines optischen Systems mit einer unmittelbar an einem Verbrennungsraum angeordneten Frontlinse. Sie bezieht sich weiter auf eine zur Durchführung des Verfahrens geeignete Vorrichtung.

Bei der Verbrennung von fossilem Brennstoff oder Müll in einem Verbrennungsraum treten aufgrund der unterschiedlichen Herkunft des Brennstoffs bzw. aufgrund der heterogenen Zusammensetzung des Mülls Schwankungen im Heizwert des Brennstoffs oder der Brennstoffmischung auf. Diese Schwankungen wirken sich nachteilig auf die Schadstoffemission des Verbrennungsprozesses aus. Diese Nachteile bestehen auch bei der industriellen Reststoffverbrennung, bei der üblicherweise die Verbrennung fester und flüssiger sowie gasförmiger Brennstoffe gleichzeitig vorgesehen ist. Bei Kenntnis der den Verbrennungsprozeß charakterisierenden Parameter kann eine Optimierung der Feuerungsregelung und somit eine Optimierung des Verbrennungsprozesses erzielt werden.

Zur Ermittlung der den Verbrennungsprozeß charakterisierenden Parameter kann der Einsatz einer Vorrichtung zur Verbrennungsanalyse vorgesehen sein. Diese erfaßt beispielsweise über ein optisches system mit einer unmittelbar am Verbrennungsraum angeordneten Frontlinse Intensitätswerte vom Licht des Verbrennungprozesses, die in ihrer Gesamtheit ein Bild einer Flamme des Verbrennungsprozesses ergeben. Aus den ortsaufgelösten Intensitätswerten des Bildes sind dann beispielsweise die Temperaturverteilung und die Konzentrationsverteilung von im Verbrennungsprozeß entstehenden Reaktionsprodukten ermittelbar. Eine derartige Vorrichtung und ein zu deren Betrieb geeignetes Verfahren sind aus der deutschen Patentanmeldung DE 197 10 206 A1 bekannt.

Aus der deutschen Patentanmeldung DE 28 47 935 A1 ist eine Vorrichtung zur Durchführung eines Verfahrens zum Auffinden von Verschmutzungen an Prüflingen im Durchlicht und zum Signalisieren von Veränderungen bei der Durchlichtung des Prüflings bekannt. Einen durchsichtigen Körper abhängig vom Verschmutzungsgrad zu reinigen ist aus der deutschen Patentanmeldung DE 29 04 126 A1 bekannt.

Weiterhin ist aus der Patentschrift DE 1909029 ein Verfahren und ein Überwachungsmodul bekannt, welche anhand eines Vergleiches der gemessenen Lichtintensitäten mit einem Referenzwert den Reinigungszeitpunkt eines Fensters eines Verbrennungsraums bestimmen.

Für eine zuverlässige optische Kontrolle des Verbrennungsprozesses und eine darauf basierende Regelung desselben ist eine besondere Qualität der zur Analyse herangezogenen Intensitätswerte von Bedeutung. Allerdings kann aufgrund der bei der Verbrennung entstehenden Abfallprodukte eine Verschmutzung der Frontlinse des zur Ermittlung der Intensitätswerte herangezogenen optischen Systems und damit eine Verschlechterung der Qualität der Daten verbunden sein. Daher ist in regelmäßigen Zeitabständen eine zeitaufwendige Wartung und/oder Reinigung der unmittelbar mit dem Verbrennungsraum in Kontakt stehenden Frontlinse des optischen Systems erforderlich. Diese Zeitabstände werden üblicherweise nach Erfahrungswerten festgesetzt und hängen nicht vom tatsächlichen Wartungsund/oder Reinigungsbedarf der Frontlinse des optischen Systems ab. Aus Sicherheitsgründen sind daher Wartungsund/oder Reinigungsarbeiten üblicherweise häufiger vorgesehen als aus betrieblichen Gründen erforderlich. Damit sind jedoch hohe Stillstandzeiten und eine geringe Verfügbarkeit des optischen Systems und somit auch des Verbrennungsraums verbunden.

Der Erfindung liegt daher die Aufgabe zugrunde, ein Verfahren zum Überwachen eines optischen Systems mit einer unmittelbar an einem Verbrennungsraum angeordneten Frontlinse anzugeben, bei dem ohne Beeinträchtigung der Zuverlässigkeit des optischen Systems ein besonders geringes Maß an Stillstandzeiten und somit eine besonders hohe Verfügbarkeit des optischen Systems gewährleistet ist. Dies soll bei einer zur Durchführung des Verfahrens geeigneten Vorrichtung mit besonders geringem technischen Aufwand erreicht werden.

Bezüglich des Verfahrens wird die genannte Aufgabe erfindungsgemäß gelöst, indem über das optische System Intensitätswerte aus dem Licht einer Flamme des Verbrennungsraums aufgenommen werden, und wobei die Frontlinsenoberfläche bei Bedarf gereinigt wird, wobei aus den Intensitätswerten ein Temperaturwert und ein gemittelter Intensitätswert bestimmt werden, und wobei aus dem Temperaturwert und dem gemittelten Intensitätswert der relative Verschmutzungsgrad der Frontlinse ermittelt und zur Festsetzung eines Reinigungsund/oder Wartungszeitpunkts der Frontlinse herangezogen wird.

Die Erfindung geht dabei von der Überlegung aus, daß für ein besonders geringes Maß an Stillstandzeiten des optischen Systems ein fester Rhythmus von Wartungs- und/oder Reinigungsarbeiten der Frontlinse nicht vorgegeben sein sollte. Vielmehr sollte anhand des tatsächlichen Wartungs- und/oder Reinigungsbedarfs der Frontlinse flexibel und bedarfsgerecht eine Wartung und/oder Reinigung derselben erfolgen. Die Festsetzung des Zeitpunkts der Durchführung der Wartungsund/oder Reinigungsarbeiten sollte sich dabei auf Meßdaten des optischen Systems stützen. Dabei ist jedoch eine Beeinträchtigung des Betriebs des optischen Systems zu vermeiden. Werden über das optische System beim Betrieb des Verbrennungsraums Intensitätswerte des Lichts einer Flamme des Verbrennungsraums bestimmt, so kann daraus ein Maß für den relativen Verschmutzungsgrad der Frontlinse des optischen Systems abgeleitet werden. Eine Verschmutzung der Frontlinse bewirkt nämlich eine charakteristische Abnahme der Intensitätswerte. Eine besonders zuverlässige Ermittlung des relativen Verschmutzungsgrads der Frontlinse ist dabei gegeben durch den Vergleich eines aus direkt gemessenen Intensitätswerten gemittelten Intensitätswerts (Ist-Intensitätswert) mit einem Intensitätswert (Soll-Intensitätswert), der aus einem für die Flamme bestimmten Temperaturwert ermittelt worden ist.

Der zur Bestimmung des Verschmutzungsgrads der Frontlinse des optischen Systems erforderliche Temperaturwert wird vorteilhafterweise aus einem Intensitätswert einer ersten Wellenlänge und aus einem Intensitätswert einer zweiten Wellenlänge des Lichts der Flamme im Verbrennungsraum bestimmt. Hierzu werden zwei schmalbandige Spektralbereiche mit jeweils einem Wellenlängenband von ca. 10 nm aus dem Strahlenspektrum der Flamme des Verbrennungsraums ausgekoppelt. Diese Spektralbereiche liegen dabei insbesondere jeweils in einem Wellenlängenbereich ohne Emissionslinien des Verbrennungsprodukts, in den sogenannten bandenfreien Bereichen. Nach dem Planck' schen Strahlungsgesetz liegt in den bandenfreien Bereichen nämlich lediglich Planckstrahlung vor, so daß durch Verhältnisbildung der Intensitätswerte dieser Spektralbereiche ein Temperaturwert des Lichts der Flamme des Verbrennungsraums bestimmbar ist.

Bezüglich der Vorrichtung zur Festsetzung des Reinigungsund/oder Wartungszeitpunkts eines optischen Systems mit einer unmittelbar am Verbrennungsraum angeordneten Frontlinse wird die genannte Aufgabe gelöst, indem ein Überwachungsmodul vorgesehen ist, welches anhand von Meßwerten des optischen Systems einen Temperaturwert und einen gemittelten Intensitätswert einer Flamme des Verbrennungsraums bestimmt und daraus den relativen Verschmutzungsgrad der Frontlinse ermittelt.

Das optische System kann zur Verbrennungsanalyse des Verbrennungsraums dienen und hierfür ortsaufgelöste Intensitätswerte einzelner Flammen des Verbrennungsraums aufnehmen. In diesem Fall können die Intensitätswerte sowohl zur Verbrennungsanalyse als auch zur Bestimmung des Verschmutzungsgrads der Frontlinse des optischen Systems herangezogen werden. Zur Ortsauflösung der Intensitätswerte ist dabei zweckmäßigerweise als Aufnahmeplatte eine "Charge-Coupled-Device-Kamera" vorgesehen. Diese CCD-Kamera, auch optischer Bildsensor genannt, nimmt dabei das von der Flamme ausgestrahlte Licht oder das Strahlenspektrum der Flamme auf.

Um den Einsatz des optischen Systems unmittelbar an heißen Anlagenteilen, z.B. an einem Kessel, zu ermöglichen, ist zweckmäßigerweise ein Kühlsystem für das optische System vorgesehen. Dabei umfaßt das Kühlsystem beispielsweise ein Peltierelement. Unter Ausnutzung des Peltiereffektes kühlt sich das Peltierelement gegenüber der Umgebungstemperatur ab, ein mit dem Peltierelement verbundener Kühlkörper erwärmt sich dagegen. Darüber hinaus können die übrigen zum optischen System gehörenden elektronischen Komponenten mit Kühl- oder Spülluft gekühlt sein.

Die mit der Erfindung erzielten Vorteile bestehen insbesondere darin, daß durch die Ermittlung des relativen Verschmutzungsgrads der Frontlinse des optischen Systems anhand von aktuell erfaßten Meßdaten eine bedarfsgerechte Festsetzung eines Wartungs- und/oder Reinigungszeitpunkts ermöglicht ist. Wartungs- und Reinigungsarbeiten an der Frontlinse des optischen Systems müssen somit nicht in einem festen Zeitintervall erfolgen, sondern können in Abhängigkeit von dem festgestellten relativen Verschmutzungsgrad der Frontlinse bedarfsabhängig vorgenommen werden. Hierdurch sind besonders geringe Stillstandzeiten und eine besonders hohe Verfügbarkeit des optischen Systems gegeben.

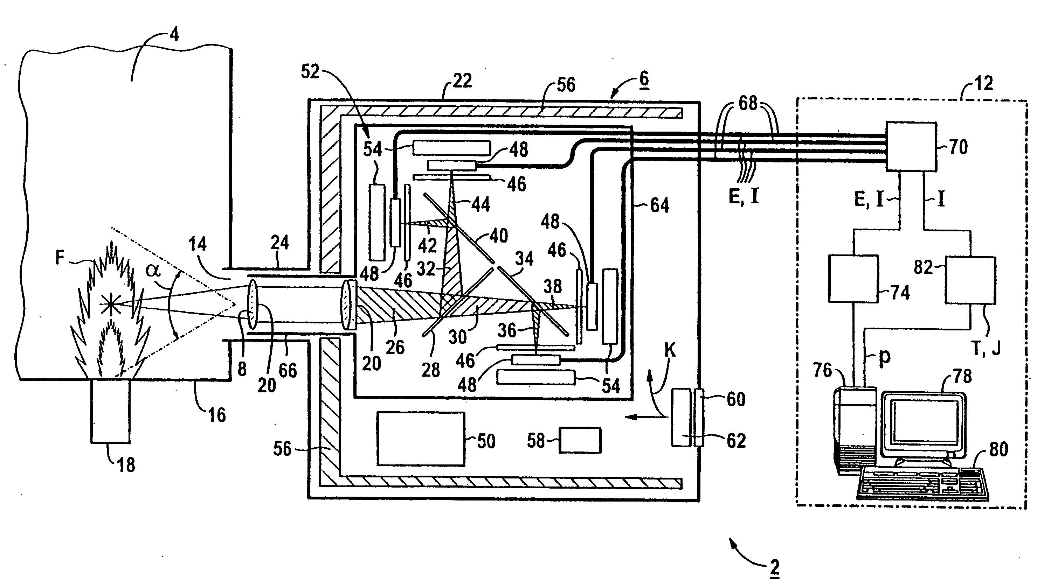

Ein Ausführungsbeispiel der Erfindung wird anhand einer Zeichnung näher erläutert. Darin zeigt die Figur schematisch eine Vorrichtung zur Verbrennungsanalyse.

Die Vorrichtung 2 zur Verbrennungsanalyse dient zur Verbrennungsanalyse des im Verbrennungsraum 4 stattfindenden Verbrennungsprozesses. Die Vorrichtung 2 zur Verbrennungsanalyse umfaßt dazu ein optisches System 6 mit einer unmittelbar am Verbrennungsraum 4 angeordneten Frontlinse 8 und ein Datenverarbeitungssystem 12.

Der Feuer- oder Verbrennungsraum 4 ist einer nicht dargestellten Dampferzeugeranlage, z.B. einem fossil gefeuerten Dampferzeuger einer Kraftwerksanlage oder einer Müllverbrennungsanlage, zugeordnet. Zur Kontrolle des im Verbrennungsraum 4 ablaufenden Verbrennungsprozesses erfaßt das optische System 6 über eine Öffnung 14 in der Wandung 16 des Verbrennungsraumes 4 für die Verbrennung signifikante Strahlungsdaten in Form von Bildern und leitet diese dem Datenverarbeitungssystem 12 zu. Dabei ist das optische System 6 derart an der Wandung 16 des Verbrennungsraums 4 mittels nicht näher dargestellter Befestigungsmittel positioniert, daß sich ein möglichst großes Sichtfeld, d.h. ein großer Sichtwinkel $\alpha$, auf mindestens eine im Verbrennungsraum 4 bei der Verbrennung entstehende Flamme F eines Brenners 18 des Verbrennungsraums 4 ergibt.

Das optische System 6 umfaßt eine unmittelbar am Verbrennungsraum 4 angeordnete Frontlinse 8, die einem Objektiv 20 zugeordnet ist, das mehrere Linsen umfassen kann. Außerdem umfaßt das optische System 6 ein Gehäuse 22 mit einem zylinderförmigen Aufsatz 24. Die von der Flamme F des Brenners 18 ausgehende Strahlung durchdringt in einem Abbildungsstrahlengang die Frontlinse 8, so daß Bündelstrahlen 26 auf einen dem Objektiv 20 nachgeschalteten Strahlteiler 28 fallen. Dabei weisen die Bündelstrahlen 26 auch die bei der Verbrennung entstehenden Emissionslinien oder Bandenstrahlungen der Reaktionsprodukte des Verbrennungsprozesses auf.

Der Strahlteiler 28 teilt die Bündelstrahlen 26 oder das Strahlenspektrum der Flamme F durch physikalische Strahlteilung in einen ersten und einen zweiten Teilstrahl 30 bzw. 32 auf. Der erste Teilstrahl 30 fällt anschließend auf einen in Bezug auf die einfallende Strahlung hinter dem Strahlteiler 28 angeordneten weiteren Strahlteiler 34. Der Strahlteiler 34 spaltet den Teilstrahl 30 in einen ersten Anteil 36 und in einen zweiten Anteil 38 auf. Ebenso fällt der zweite Teilstrahl 32 auf einen in Bezug auf den Strahlengang hinter dem Strahlteiler 28 angeordneten weiteren Strahlteiler 40 und wird von diesem in einen ersten Anteil 42 und in einen zweiten Anteil 44 geteilt. Bei den jeweiligen Strahlteilungen bleibt der Bündelquerschnitt ungeändert, d.h. die Aufteilung der Bündelstrahlen 26 erfolgt gleichmäßig über den gesamten Querschnitt der Strahlteiler 28, 34, 40 entsprechend deren jeweiligem Reflexions- und Transmissionsgrad. Die Strahlteiler 28, 34, 40, die beispielsweise als Linienoder Schmalbandfilter ausgebildet sein können, ermöglichen somit eine wellenlängenabhängige physikalische Teilung der Bündelstrahlen 26 in eine Anzahl von Teilstrahlen 30 bzw. 32 und deren jeweilige Anteile 36, 38 bzw. 42, 44, die wiederum jeweils einen vorgebbaren Spektralbereich aufweisen können. Die Spektralbereiche der Anteile 36, 38 bzw. 42, 44 der Teilstrahlen 30 bzw. 32 können bedarfsweise durch eine Anzahl von Korrekturfiltern 46, die unmittelbar hinter den Strahlteilern 34 bzw. 40 anzuordnen sind, weiter eingeschränkt sein. In Abhängigkeit von den auszukoppelnden Spektralbereichen der Anteile 36, 38 bzw. 42, 44 der Teilstrahlen 30 bzw. 32 der Bündelstrahlen 26 aus dem Strahlenspektrum der Flamme F des Brenners 18 können weitere Korrekturfilter 46 vorgesehen sein.

Die aus dem Strahlenspektrum der Flamme F herausgefilterten Spektralbereiche der Anteile 36, 38, bzw. 42, 44 werden jeweils auf eine zugehörige Aufnahmeplatte 48 abgebildet. Die Anzahl der in dem optischen System 8 angeordneten Aufnahmeplatten 48 ist dabei an die Anzahl der zur Kontrolle des Verbrennungsprozesses erforderlichen Parameter angepaßt. Als Aufnahmeplatten 48 werden insbesondere CCD-Bildsensoren mit einer spektralen Empfindlichkeit von ca. 300 nm bis ca. 1000 nm verwendet, so daß das gesamte sichtbare Strahlenspektrum der Flamme F problemlos erfaßt werden kann. Bauweise und Arbeitsprinzip eines solchen CCD-Bildsensors sind aus der Druckschrift "Halbleiter-Optoelektronik" von Maximilian Bleicher, 1986, Dr. A. Hüthig Verlag, Heidelberg, bekannt. Zur Stromversorgung der Aufnahmeplatten 48 umfaßt das optische System 8 dabei ein Netzteil 50.

Um den Einsatz des optischen Systems 6 unmittelbar am Verbrennungsraum 4 zu ermöglichen, umfaßt das optische System 6 ein Kühlsystem 52. Um ein Rauschen des durch die Aufnahmeplatte 48 aufgenommenen Bildes zu verhindern, muß die Betriebstemperatur jeder Aufnahmeplatte 48 nämlich unterhalb einer Betriebstemperatur von ca. 40 °C gehalten werden. Für jede Aufnahmeplatte 48 umfaßt das Kühlsystem 52 dabei ein Kühlelement 54, z.B. ein Peltierelement mit Kühlkörper. Darüber hinaus umfaßt das Kühlsystem 52 eine an der Innenwand des Gehäuses 22 angeordnete Isolation 56, insbesondere Isolationswolle. Zur Temperaturmessung umfaßt das optische System 6 zudem einen Temperatursensor 58, z.B. einen Thermistor oder einen Thermoschalter, dessen Meßwert einem Ventilator 60 in nicht näher dargestellter Weise zugeführt wird. Dem Ventilator 60 ist ein Filter 62 zur Reinigung der Kühlluft K vorgeschaltet.

Zum Schutz vor Verunreinigungen sind die Aufnahmeplatten 48 und die optischen Komponenten, insbesondere die Strahlteiler 28, 34 und 40, die Korrekturfilter 46 und das Objektiv 20 sowie die Kühlelemente 54 von einer im Gehäuse 22_ angeordneten Kammer 64 oder Kapsel umgeben. Beispielsweise ist die Kammer 64 in Form eines Blechkastens mit einem auf einer Seitenfläche angeordneten zylinderförmigen Stutzen 66 ausgeführt. Das Gehäuse 22 ist im wesentlichen an die Form der Kammer 64 angepaßt, wobei der zylinderförmige Aufsatz 24 des Gehäuses 22 in die Öffnung 14 der Wandung 16 des Verbrennungsraums 4 eingesetzt ist.

Die Aufnahmeplatten 48 sind jeweils über eine Leitung 68 an das Datenverarbeitungssystem 12 angeschlossen. Das Datenverarbeitungssystem 12 umfaßt ein Eingangsmodul 70, ein Analysemodul 74, ein Zentralmodul 76 sowie einen Bildschirm 78 und eine Dateneingabeeinrichtung 80. Die Leitungen 68 münden jeweils in das Eingangsmodul 70, das datentechnisch mit dem Analysemodul 74 verbunden ist. Das Analysemodul 74 wiederum ist datentechnisch mit dem Zentralmodul 76 verbunden, das an den mit der Dateneingabeeinrichtung 80 verbundenen Bildschirm 78 angeschlossen ist.

Beim Betrieb des Verbrennungsraums 4 werden zur Kontrolle des Verbrennungsprozesses Strahlungsdaten über das optische System 6 erfaßt. Dabei wird mittels des optischen Systems 6 die Flamme F des Brenners 18 erfaßt. Je nach Positionierung und Sichtwinkel $\alpha$ des optischen Systems 6 kann dieses auch mehrere Flammen F mehrerer Brenner 18 gleichzeitig erfassen. Mit anderen Worten: Bei einer Positionierung des optischen Systems 6 in einem Winkel von 90° zu in einer Linie von hintereinander angeordneten Brennern 18 kann das optische System 6 bei einem sehr großen Sichtfenster $\alpha$ eine oder mehrere Flammen F des Verbrennungsraums 4 erfassen.

Für eine Verbrennungsanalyse nimmt das optische System 6 Emissionslinien E oder Bandenstrahlungen der Reaktionsprodukte des Verbrennungsprozesses und Intensitätswerte I des Lichts der Flamme F des Brenners 18 auf. Aus den ortsaufgelösten Emissionslinien E und den Intensitätswerten I des Bildes sind dann beispielsweise die Temperaturverteilung und die Konzentrationsverteilung von im Verbrennungsprozeß entstehenden Reaktionsprodukten ermittelbar. Darauf basiert eine nicht näher dargestellte Regelung des Verbrennungsprozesses.

Zur Ermittlung der Emissionslinien E und Intensitätswerte I der Flamme F des Verbrennungsraums 4 werden die Bündelstrahlen 26 der Flamme F über die Frontlinse 8 und das optische System 6 auf den Strahlteiler 28 gestrahlt. Der Strahlteiler 28, insbesondere ein Gelbfilter, transmittiert den ersten Teilstrahl 30 mit Wellenlängen größer als 545 nm (gelbes Licht) und reflektiert den zweiten Teilstrahl 32 mit Wellenlängen von weniger als 500 nm (blaues Licht). Anschließend wird mittels des Strahlteilers 34, insbesondere eines Rotfilters, der auf diesen auftreffende Teilstrahl 30 in den ersten Anteil 36 und den zweiten Anteil 38 geteilt. Dabei weist der erste reflektierte Anteil 36 Wellenlängen von weniger als 630 nm (oranges Licht) und der zweite transmittierte Anteil 38 Wellenlängen von mehr als 630 nm (rotes Licht) auf. Da der erste Teilstrahl 30 lediglich Wellenlängen größer als 545 nm (gelbes Licht) umfaßt, weist der erste reflektierte Anteil 36 eine Bandbreite von 545 nm bis 630 nm (oranges Licht) auf. Durch den Strahlteiler 40 wird der vom Strahlteiler 28 reflektierte zweite Teilstrahl 32 in den ersten Anteil 42 mit Wellenlängen von mehr als 400 nm (grünes Licht) und den zweiten Anteil 44 mit Wellenlängen von weniger als 400 nm unterteilt. Da der zweite reflektierte Teilstrahl 32 Wellenlängen von weniger als 500 nm (blaues Licht) umfaßt, weist der transmittierte erste Anteil 42 eine Bandbreite von 400 nm bis 500 nm (grünes Licht) auf.

Als Strahlteiler 28, 34 und 40 können alle lichtablenkenden oder -teilenden optischen Komponenten eingesetzt werden, z.B. Farbfilter, Prismen oder Spiegel. Die in dem optischen System 6 eingesetzten Strahlteiler 28, 34 und 40 sind sogenannte dichroitische additive oder subtraktive Farbfilter, die sowohl für eine vorgebbare Wellenlängenbandbreite den Spektralbereich reflektieren, als auch für eine zweite Wellenlängenbandbreite dessen Spektralbereich transmittieren. Auch kann die Teilung und Filterung der Spektralbereiche durch Aperturteilung und entsprechende Filterung erfolgen.

Die durch die Strahlteiler 28, 34 und 40 herausgefilterten Spektralbereiche der Anteile 36, 38 bzw. 42, 44 werden mittels der Korrekturfilter 46 auf eine Bandbreite von ca. 10 nm begrenzt. D.h. die jeweiligen Korrekturfilter 46 begrenzen die Wellenlängen der Anteile 36 und 38 auf eine Bandbreite von 645 bis 655 nm bzw. von 545 nm bis 555 nm. Analog dazu begrenzen die jeweiligen Korrekturfilter 46 die Wellenlängen der Anteile 42 und 44 auf eine Bandbreite von 445 bis 455 nm bzw. von 375 bis 385 nm. Als Korrekturfilter 46 sind insbesondere Interferenzfilter mit einer Bandbreite von 10 nm +/-2 nm vorgesehen.

Die Emissionslinien E und die Intensitätswerte I oder das Licht der jeweils herausgefilterten Anteile 36, 38 bzw. 42, 44 werden von den entsprechenden Aufnahmeplatten 48 aufgenommen. Die aus den ortsaufgelösten Emissionslinien E und Intensitätswerten I der Bilder resultierenden Spannungswerte der Aufnahmeplatten 48 werden dann dem Eingangsmodul 70 des Datenverarbeitungssystems 12 zugeführt. Von da aus gelangen diese Strahlungsdaten in das Analysemodul 74. Dort wird die räumliche Verteilung des jeweiligen Parameters, z.B. die Temperatur oder die Konzentration von CO oder von CN, ermittelt. Die zur Verbrennungsanalyse relevanten Parameter sind dann auf dem Bildschirm 78 darstellbar.

Um Fehler bei der Erfassung der zur Analyse des Verbrennungsprozesses herangezogenen Strahlungsdaten infolge von Verschmutzungen der Frontlinse 8 zuverlässig zu vermeiden, ist in bestimmten Zeitabständen eine Reinigung und/oder Wartung der Frontlinse 8 des optischen Systems 6 erforderlich. Die Festsetzung des Zeitpunkts für diese Reinigungs- und/oder Wartungsarbeiten erfolgt bedarfsabhängig durch ein dem Datenverarbeitungssystem 12 zugeordnetes Überwachungsmodul 82, das dem Analysemodul 74 parallel geschaltet ist.

Hierfür nimmt das optische System 8 Intensitätswerte I des Lichts der Flamme F des Brenners 18 des Verbrennungsraums 4 auf. Dies erfolgt entweder separat und speziell für die Bestimmung des relativen Verschmutzungsgrads der Frontlinse 8 oder aber im Rahmen der Erfassung von Meßdaten für die Verbrennungsanalyse. Auch diese Intensitätswerte I werden, sofern sie in einer separaten Messung erfaßt werden, dem Eingangsmodul 70 des Datenverarbeitungssystems 12 zugeführt. Dies leitet sie datentechnisch an das Überwachungsmodul 82 weiter, in dem eine Berechnung des relativen Verschmutzungsgrads p der Frontlinse 8 erfolgt.

Dazu wird anhand der Intensitätswerte I ein Temperaturwert T der Flamme F des Brenners 18 bestimmt, aus dem wiederum ein Sollwert berechnet wird. Dieser Sollwert wird mit einem Mittelwert tatsächlich gemessener Intensitätswerte J, dem Istwert, verglichen, woraus sich der relative Verschmutzungsgrad p der Frontlinse 8 des optischen Systems 6 ergibt.

Zur Bestimmung des Temperaturwerts T der Flamme F des Brenners 18 werden dabei im Ausführungsbeispiel der Intensitätswert I1 des ersten Anteils 36 des ersten Teilstrahls 30 und der Intensitätswert I2 des zweiten Anteils 38 des ersten Teilstrahls 30 herangezogen. Dabei wird sowohl dem Intensitätswert I1 als auch dem Intensitätswert I2 jeweils eine Wellenlänge $\lambda 1$ bzw. $\lambda 2$ zugeordnet. Die dem Intensitätswert I1 bzw. I2 zugehörige Wellenlänge $\lambda 1$ bzw. $\lambda 2$ ist dabei beispielsweise die Durchlaß-Wellenlänge des Korrekturfilters 46, durch den der erste Anteil 36 bzw. der zweite Anteil 38 des ersten Teilstrahls 30 hindurchtritt. Mit dem Intensitätswert I1 der Wellenlänge $\lambda 1$ und dem Intensitätswert I2 der Wellenlänge $\lambda 2$, die sich auf denselben Bereich des Bildes der Flamme F bezieht, wird ein Temperaturwert T für die Flamme F ermittelt. Dabei sind die beiden Wellenlängen $\lambda 1$ und $\lambda 2$ derart gewählt, daß sie in einem Wellenlängenbereich ohne Emissionslinien eines Verbrennungsprodukts des Verbrennungsraums 4 liegen, in einem sogenannten bandenfreien Bereich. Für einen Punkt X der Flamme F ergibt sich der Tempera-

turwert $T_x$ gemäß der Verhältnispyrometrie in dem Punkt X gemäß der Formel:

$$T_X = \frac{C\left(\dfrac{1}{(\lambda 1)} - \dfrac{1}{(\lambda 2)}\right)}{\ln\left(\dfrac{I2_X}{I1_X} * \dfrac{(\lambda 2)^5}{(\lambda 1)^5}\right)}$$

mit

$C = \dfrac{hc}{k}$ = 1,438789·10⁻² $mK$, wobei h die Planck'sche Konstante, c die Lichtgeschwindigkeit im Vakuum und k die Boltzmannkonstante ist.

$$I1_X = g_a\left(i_X^{(a)} - o_a\right),$$

$$I2_x = g_b\left(i_X^{(b)} - o_b\right),$$

$i_X^{(a)}, i_X^{(b)}$ der gemessene Intensitätswert der Aufnahmeplatte 48 im Punkt x ist,

$o_a$, $o_b$ ein von der jeweiligen Aufnahmeplatte 48 abhängiger Offset und

$g_a$, $g_b$ ein von der jeweiligen Aufnahmeplatte 48 abhängiger Verstärkungsfaktor ist.

Zur Bestimmung des relativen Verschmutzungsgrads p der Frontlinse 8 des optischen Systems 6 wird nun noch ein gemittelter Intensitätswert J aus den gemessenen Intensitätswerten I bestimmt. Gemittelter Wert bedeutet dabei, daß über einen Bereich des Bildes die lokal gemessenen Intensitätswerte I aufaddiert werden, und die sich ergebende Summe durch die Anzahl der Intensitätswerte I geteilt wird. Das Ergebnis ist dann der gemittelte Intensitätswert J. Als Intensitätswerte I sind hierfür beispielsweise die vorgesehen, die von der Aufnahmeplatte 48 aufgenommen worden sind, auf die der erste Anteil 36 des ersten Teilstrahls 30 gelenkt worden ist. Der so berechnete gemittelte Intensitätswert J wird dann ins Verhältnis gesetzt zu dem Intensitätswert $I1_x$, den man aus der obigen Formel für den Temperaturwert $T_x$ durch Auflösung der Formel nach $I1_x$ mit Hilfe des berechneten Temperaturwerts $T_x$ erhalten hat.

Daraus läßt sich mit einer Umrechnung in Prozent der relative Verschmutzungsgrad p der Frontlinse 8 des optischen Systems 6 gemäß der Ein-Wellenlängen-Pyrometrie bestimmen zu:

$$p = 100 \cdot \left(1 - \frac{g_a\left(J_a - o_a\right)}{\dfrac{K}{(\lambda 1)^5} \exp\left(\dfrac{-K}{\lambda 1 \cdot T_x}\right)}\right)$$

mit

$K = \dfrac{2hc^2}{\Omega}$ = 3,7832·10⁻¹⁶ $Wm^2$, wobei $\Omega$ der Raumwinkel ist, der bei der Kalibrierung bestimmt wird.

Mit dem ermittelten relativen Verschmutzungsgrads p der Frontlinse 8 des optischen Systems 6 läßt sich anhand von Erfahrungswerten feststellen, ob eine Reinigung und/oder Wartung des optischen Systems 6 erforderlich ist. Somit müssen Wartungs- und Reinigungsarbeiten am optischen System 6 nicht in einem festen Zeitintervall erfolgen, sondern können in Abhängigkeit von dem festgestellten relativen Verschmutzungsgrad p der Frontlinse 8 des optischen Systems 6 vorgenommen werden. Hierdurch sind besonders geringe Stillstandzeiten des optischen Systems 6 und eine besonders hohe Verfügbarkeit der kontrollierten Verbrennung im Verbrennungsraum 4 gegeben.

**Patentansprüche**

1. Verfahren zum Überwachen eines optischen Systems (6) mit einer unmittelbar an einem Verbrennungsraum (4) angeordneten Frontlinse (8), wobei über das optische System (6) Intensitätswerte (I) aus dem Licht einer Flamme (F) des Verbrennungsraums (4) aufgenommen werden, und wobei die Frontlinse bei Bedarf gereinigt wird,
   **dadurch gekennzeichnet, daß** aus den Intensitätswerten (I) ein Temperaturwert (T) und ein gemittelter Intensitätswert (J) bestimmt werden und daß aus dem Temperaturwert (T) und dem gemittelten Intensitätswert (J) der relative Verschmutzungsgrad (p) der Frontlinse (8) ermittelt und zur Festsetzung eines Reinigungs- und/oder Wartungszeitpunkts der Frontlinse (8) herangezogen wird.

2. Verfahren nach Anspruch 1,
   bei dem der mittlere Temperaturwert (T) der Flamme (F) aus einem ersten Intensitätswert (I1) einer ersten Wellenlänge (λ1) und aus einem zweiten Intensitätswert (I2) einer zweiten Wellenlänge (λ2) des Lichts der Flamme (F) des Verbrennungsraums (4) bestimmt wird.

3. Überwachungsmodul zur Festsetzung eines Reinigungs- und/oder Wartungszeitpunkts eines optischen Systems (8) mit einer unmittelbar an einem Verbrennungsraum (4) angeordneten Frontlinse (6), welches anhand von Meßwerten des optischen Systems (8) einen Temperaturwert (T) und einen gemittelten Intensitätswert (J) einer Flamme (F) des Verbrennungsraums (4) bestimmt und daraus den relativen Verschmutzungsgrad (p) der Frontlinse (8) ermittelt.

## Claims

1. Method for monitoring an optical system (6) having a front lens (8) arranged directly at a combustion chamber (4), intensity values (I) from the light of a flame (F) of the combustion chamber (4) being recorded via the optical system (6), and the front lens being cleaned if necessary, **characterized in that** a temperature value (T) and a mean intensity value (J) are determined from the intensity values (I), and **in that** the relative degree of pollution (p) of the front lens (8) is determined from the temperature value (T) and the mean intensity value (J), and is used to determine a cleaning and/or maintenance time of the front lens (8).

2. Method as claimed in Claim 1, in which the mean temperature value (T) of the flame (F) is determined from a first intensity value (I1) of a first wavelength ($\lambda$1) and from a second intensity value (I2) of a second wavelength ($\lambda$2) of the light of the flame (F) of the combustion chamber (4).

3. Monitoring module for determining a cleaning and/or maintenance time of an optical system (8) having a front lens (6) which is arranged directly at a combustion chamber (4), which determines with the aid of measured values of the optical system (8) a temperature value (T) and a mean intensity value (J) of a flame (F) of the combustion chamber (4), and determines therefrom the relative degree of pollution (p) of the front lens (8).

## Revendications

1. Procédé de surveillance d'un système optique (6) comportant une lentille frontale (8) disposée directement au niveau d'une chambre de combustion (4), dans lequel des valeurs d'intensité (I) de la lumière d'une flamme (F) de la chambre de combustion (4) sont mesurées par le système optique (6), et dans lequel la lentille frontale est nettoyée en cas de besoin,
   **caractérisé en ce qu'**une valeur de température (T) et une valeur d'intensité moyennée (J) sont déterminées à partir des valeurs d'intensité (I), et **en ce que** le niveau d'encrassement relatif (p) de la lentille frontale (8) est déterminé à partir de la valeur de température (T) et de la valeur d'intensité moyennée (J) et est utilisé pour déterminer un instant de nettoyage et/ou d'entretien de la lentille frontale (8).

2. Procédé selon la revendication 1, dans lequel la valeur de température moyenne (T) de la flamme (F) est déterminée à partir d'une première valeur d'intensité (I1) d'une première longueur d'onde ($\lambda$1) et à partir d'une seconde valeur d'intensité (I2) d'une seconde longueur d'onde ($\lambda$2) de la lumière de la flamme (F) de la chambre de combustion (4).

3. Module de surveillance pour la détermination d'un instant de nettoyage et/ou d'entretien d'un système optique (8) comportant une lentille frontale (6) disposée directement au niveau d'une chambre de combustion (4), lequel module de surveillance détermine à l'aide de valeurs de mesure du système optique (8) une valeur de température (T) et une valeur d'intensité moyennée (J) d'une flamme (F) de la chambre de combustion (4) à partir desquelles il détermine le niveau d'encrassement relatif (p) de la lentille frontale (8).